Europäisches Patentamt

European Patent Office

Office européen des brevets

(19)

(11)  **EP 0 810 420 A2**

(12)  **EUROPÄISCHE PATENTANMELDUNG**

(43) Veröffentlichungstag:
    **03.12.1997  Patentblatt 1997/49**

(51) Int Cl.[6]: **G01D 5/245**, G01D 5/16

(21) Anmeldenummer: **97810312.5**

(22) Anmeldetag: **21.05.1997**

(84) Benannte Vertragsstaaten:
    **BE CH DE ES FR GB IT LI NL**

(30) Priorität: **29.05.1996  CH 1343/96**

(71) Anmelder: **Vibro-Meter AG**
    **1700 Freiburg (CH)**

(72) Erfinder: **Schmid, Felix**
    **1782 Belfaux (CH)**

(74) Vertreter:
    **AMMANN PATENTANWAELTE AG BERN**
    **Schwarztorstrasse 31**
    **3001 Bern (CH)**

(54)  **Positionsmesssystem**

(57)    Bei einem Messsystem zur kontaktlosen Messung der Position zweier relativ zueinander bewegbarer Teile (1, 2), wobei der erste Teil (1) eine Markierspur aufweist, in der ein in der Messrichtung veränderliches Signal enthalten ist, und der zweite Teil (2) einen Sensor zum Erfassen des Signals aufweist, enthält das Signal eine absolute Komponente, die für jede Position der beiden Teile (1, 2) zueinander jederzeit einen eindeutigen Zusammenhang zwischen dem Signal und der Position der beiden Teile (1, 2) zueinander darstellt und somit ein Mass für die absolute Position der beiden Teile (1, 2) zueinander ist. Die absolute Komponente des Signals ist eine monotone und kontinuierliche Funktion der zu messenden Position. So ist jederzeit die Bestimmung der absoluten Position der Teile (1, 2) zueinander möglich. ohne dass die Teile zur Initialisierung gegenseitig verschoben werden müssten.

Fig. 1

EP 0 810 420 A2

**Beschreibung**

Die Erfindung betrifft ein Messsystem gemäss dem Oberbegriff des Patentanspruchs 1.

Ein derartiges Messsystem ist bekannt aus der deutschen Offenlegungsschrift DE-A-44 02 319. Darin ist ein Bewegungsmesssystem für eine Einrichtung mit zwei gegenseitig verschiebbaren Körpern beschrieben, bei der der erste Körper eine Spur mit unterschiedlich magnetisierten Zonen aufweist. Am zweiten Körper ist ein Sensor zum Erfassen der magnetischen Flussdichteänderungen während der Relativbewegung der beiden Körper vorgesehen. Auswerteeinheiten bilden ein Grobsignal (mittels inkrementaler Auswertung) und ein Feinsignal (mittels analoger Auswertung), aufgrund derer die relative Verschiebung der beiden Körper bestimmt wird. Das Grobsignal stellt die Anzahl der bei der Relativbewegung durch den Sensor erfassten Zonen dar. Das Feinsignal stellt die Verschiebung innerhalb einer einzelnen Zone dar. Die absolute Stellposition der beiden Körper zueinander wird mit Hilfe einer weiteren Spur ermittelt, in der Zonen in unterschiedlichen Abständen zueinander vorkommen. Das hiermit ermittelte Phasensignal ermöglicht, zusammen mit dem Grob- und dem Feinsignal, die Bestimmung der absoluten Stellposition der beiden Körper zueinander.

Dieses Messsystem hat unter anderem den Nachteil, dass für die Ermittlung der absoluten Position der Körper zueinander zwei Spuren benötigt werden. Dies kostet nicht nur viel Platz, sondern es bringt auch produktions- und messtechnische Probleme mit sich: Die Spuren müssen so weit auseinander liegen, dass sie sich gegenseitig nicht stören, und die Sensoren müssen genau auf die jeweiligen Spuren ausgerichtet werden.

Die deutsche Offenlegungsschrift DE-A-43 44 291 betrifft einen axialen Positionsdetektor für eine Stange, bei dem eine einzige Magnetskala vorgesehen ist, welche eine magnetische Stange mit einer Vielzahl von axial darauf angeordneten, nicht-magnetischen Teilen umfasst. Diese nicht-magnetischen Teile bestehen aus ersten nicht-magnetischen Teilen mit einer gleichen Tiefe und zweiten nicht-magnetischen Teilen mit einer jeweils unterschiedlichen Tiefe. Die nicht-magnetischen Teile haben eine bestimmte, feste Breite und eine jeweilige, über die ganze Breite konstante Tiefe. Die absolute Position der Stange wird durch eine kleine Bewegung derselben mit Hilfe der zweiten nicht-magnetischen Teile, welche Bezugspunkte darstellen, ermittelt.

Die internationale Patentanmeldung WO-A-88 06717 beschreibt eine Positionsbestimmungsvorrichtung mit einer Messskala, welche in regelmässigen, kleinen Abständen angeordnete erste Markierungen und in grösseren Abständen angeordnete zweite Markierungen umfasst. Die zweiten Markierungen ergeben ein Signal mit einer grösseren Amplitude und bilden somit Bezugspunkte für die Bestimmung der absoluten Position. Auch hier muss zur Initialisierung jeweils bis zu einem Bezugspunkt gefahren werden.

Der Erfindung liegt die Aufgabe zugrunde, ein gattungsgemässes Messsystem zu schaffen, bei welchem die absolute Position der Teile zueinander einfach und genau ermittelt werden kann.

Erfindungsgemäss wird dies durch die Merkmale des kennzeichnenden Teils des Patentanspruchs 1 erreicht. Das Vorsehen der an jeder beliebigen Position jederzeit eindeutigen absoluten Komponente im Signal der Markierspur ermöglicht die Bestimmung der absoluten Position der Teile zueinander, ohne dass eine zusätzliche Markierspur, und somit ein zusätzlicher Messkanal, nötig wäre, und ohne dass die Teile zur Initialisierung zueinander verschoben werden müssten.

Weitere vorteilhafte Ausführungsformen gehen aus den Unteransprüchen hervor.

Nachfolgend werden einige beispielsweise Ausführungsformen der Erfindung an Hand der Zeichnung näher erläutert. Es zeigen:

Fig. 1     eine schematische Schnittansicht eines Messsystems gemäss der Erfindung,

Fig. 2     eine schematische Darstellung des Signalverlaufs gemäss einer ersten Ausführungsform der Erfindung,

Fig. 3     ein Schaltschema einer Auswertungsschaltung gemäss der Erfindung, und

Fig. 4     eine schematische Darstellung des Signalverlaufs gemäss einer weiteren Ausführungsform der Erfindung.

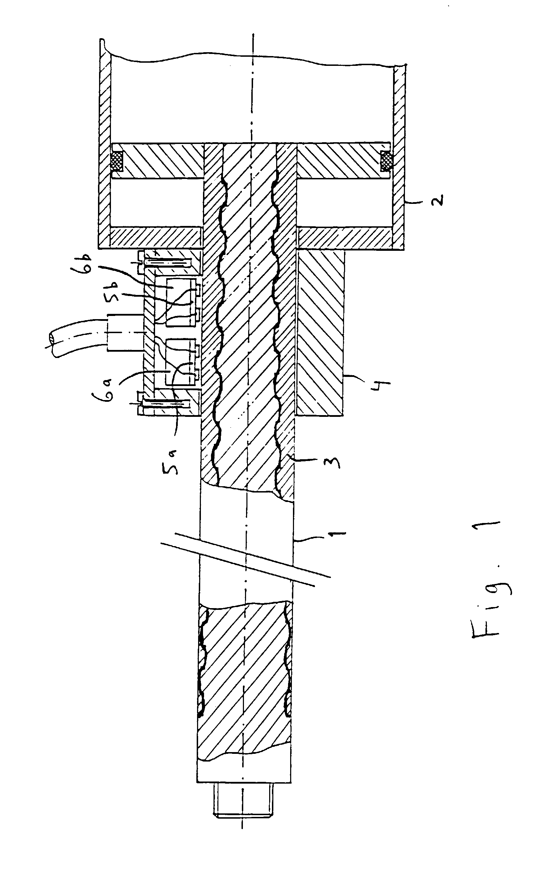

Die Figur 1 zeigt eine schematische Schnittansicht eines Messsystems gemäss der Erfindung. Eine Kolbenstange 1 eines Zylinders 2 ist mit einer ferritischen Schicht 3 versehen. Die Kolbenstange 1 und der Zylinder 2 (an sich bekannt) sind zwei gegenseitig verschiebbare Körper, deren absolute Position zueinander mit dem Messsystem kontaktlos gemessen wird. Die Schicht 3 ist beispielsweise aufgebracht oder eingeprägt und bildet eine in Mess- oder Bewegungsrichtung verlaufende Markierspur, welche ein in der Messrichtung veränderliches Signal enthält. Wie im folgenden näher erläutert wird, enthält dieses Signal eine absolute Komponente, welche an jeder beliebigen Stelle jederzeit ein Mass ist für die absolute Position der beiden Teile 1 und 2 zueinander, ohne dass anfänglich eine gegenseitige Verschiebung der Teile 1, 2 bis zu einem bestimmten Bezugspunkt nötig wäre.

An der Stirnseite des Zylinders 2 ist ein Messkopf 4 mit Sensoren zum Erfassen des Signals angebracht. Die Sensoren umfassen zwei doppelte (differentielle) Magnetfeld-Plattenelemente 5a und 5b. Diese sind jeweils mit einem Permanentmagneten 6a bzw. 6b vorgespannt. Die beiden differentiellen Messelemente 5a und 5b sind in an sich bekannter Weise mit einer Auswertungsschaltung verbunden.

Das Signal ist in einer einzigen Markierspur enthalten, welche drehsymmetrisch an der kreiszylinderförmig ausgebildeten Kolbenstange 1 vorgesehen ist. Die drehsymmetrische Anordnung der Markierspur vereinfacht sowohl die Produktion als auch das Messverfahren. Eine über nahezu die ganze Länge der Kolbenstange 1 auftretende, gleichmässige, kontinuierliche und monotone Schichtdickenänderung bildet die absolute Komponente des Signals, welche ein Mass ist für die absolute Position der beiden Teile 1 und 2 zueinander. Weiterhin enthält das Signal eine von der absoluten Komponente diskriminierbare weitere Komponente, welche ein Feinsignal darstellt. Diese ist in Figur 1 schematisch als eine sinusförmige Schichtdickenänderung dargestellt. Die zyklische Komponente hat eine Periode λ und ist der absoluten Komponente überlagert. Sie ermöglicht eine feinere Auflösung der Positionsanzeige innerhalb einer Markierperiode durch eine an sich bekannte Interpolation zwischen zwei benachbarten Extremwerten der zyklischen Komponente.

Die Mittellinien der Magnetfeld-Plattenelemente 5a und 5b sind in Messrichtung um 5/4 λ zueinander versetzt. Dadurch können zwei um 5/4 λ versetzte Signale, je mit einer absoluten sowie einer sinusförmigen Komponente, erzeugt werden, welche sich entsprechend der Position des Lesekopfs 4 gegenüber dem markierten Träger 1 ändern. Die sinusförmige Komponente kann durch eine geeignete Formgebung der Markierspur oder auch durch spezielle Massnahmen am Messkopf 4 erreicht werden. Eine geeignete Auswertelogik kann, wie im folgenden näher erläutert wird, aus diesen Signalen die Bewegungsrichtung und die absolute Position des Messkopfs 4 gegenüber der markierten Kolbenstange 1 berechnen.

Die Markierspur kann eine Aneinanderreihung von Einzelmarken oder eine kontinuierliche Veränderung einer messbaren physikalischen Grösse entlang der Bewegungsrichtung sein, in der die Position des Messkopfs detektiert werden soll. In der gleichen Markierspur ist der darin enthaltenen (vorzugsweise periodischen) Feinsignalkomponente die absolute Signalkomponente überlagert. Die beiden Signalkomponenten sind kontinuierliche Funktionen der zu messenden Position x, und die absolute Signalkomponente ist zudem eine monotone (monoton steigende oder sinkende) Funktion dieser Position. Durch entsprechende Diskriminierung der Komponenten des kombinierten Messsignals wird festgestellt, in welcher Periode und wo innerhalb dieser Periode sich der Messkopf 4 befindet.

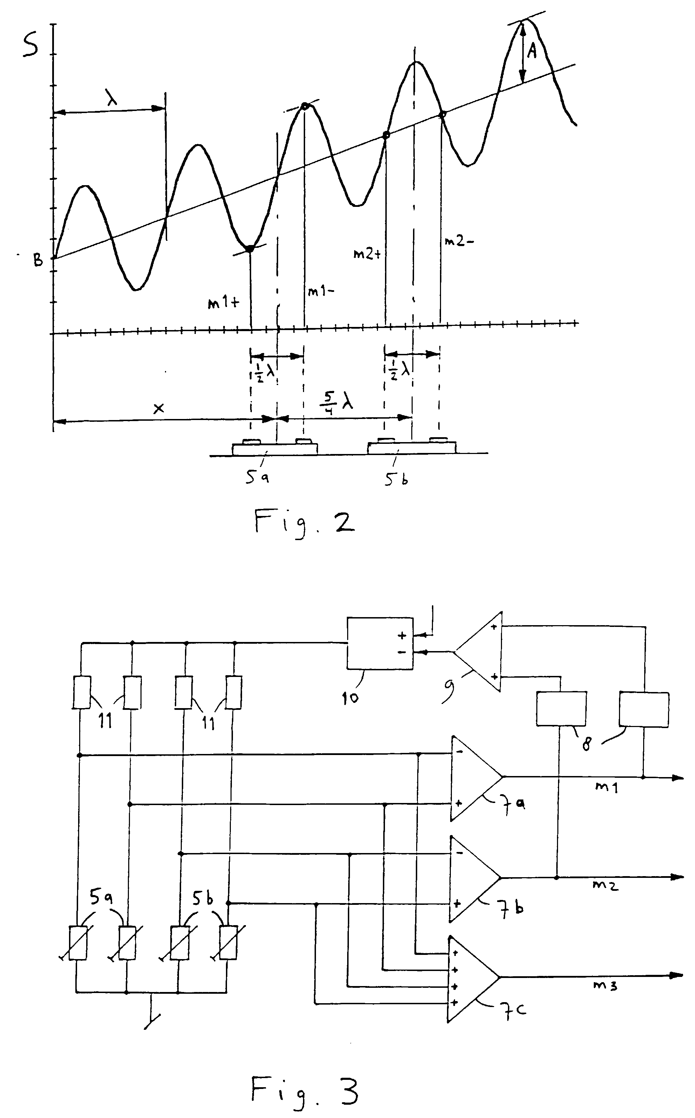

In der Figur 2 ist eine schematische Darstellung des Signalverlaufs gemäss einer ersten Ausführungsform der Erfindung wiedergegeben. Die veränderliche physikalische Grösse (beispielsweise die ferritische Schicht 3) enthält den folgenden Signalverlauf als Funktion S der zu messenden Position x:

$$S(x) = A\sin(2\pi x/\lambda) + B + Cx$$

wobei A die Amplitude der Sinuskomponente ist und B und C die Konstanten der absoluten (hier: linearen, monoton steigenden) Komponente sind. Das Gesamtsignal S ist also eine Sinusfunktion mit einem überlagerten Gleichstromanteil, der sich mit der Position x verändert.

Die Messelemente 5a und 5b sind in Messrichtung um 5/4 λ zueinander versetzt angeordnet. Vorzugsweise sind sie differentiell ausgeführt, zum Beispiel in einer Brückenschaltung, damit gleichförmig einwirkende Umgebungseinflüsse möglichst ausgeschaltet werden. Der Abstand der einzelnen, differentiellen Messelemente beträgt vorzugsweise ½λ. Die Messsignale des differentiellen Messelements 5a betragen m1+ bzw. m1-, und die Messsignale des differentiellen Messelements 5b betragen m2+ bzw. m2-.

Für λ = 2π (erreichbar mit einem geeigneten Normierungsfaktor) gilt:

$$S(x) = A\sin(x) + B + Cx$$

so dass

$$\begin{aligned}
m1+ = S(x - \tfrac{1}{4}\lambda) = S(x - \tfrac{1}{2}\pi) &= A\sin(x - \tfrac{1}{2}\pi) + B + C(x - \tfrac{1}{2}\pi) \\
&= -A\cos(x) + B + Cx - \tfrac{1}{2}\pi C
\end{aligned}$$

$$\begin{aligned}
\text{m1--} = S(x+\tfrac{1}{4}\lambda) = S(x+\tfrac{1}{2}\pi) &= A\sin(x+\tfrac{1}{2}\pi) + B + C(x+\tfrac{1}{2}\pi) \\
&= A\cos(x) + B + Cx + \tfrac{1}{2}\pi C
\end{aligned}$$

und der Messwert m1 des Messelements 5a

$$\text{m1} = \text{m1+} - \text{m1-} = -2A\cos(x) - \pi C$$

beträgt. Ebenso (Messelement 5b ist in der Fig. 1 um $5\lambda/4$ gegenüber Messelement 5a versetzt) gilt:

$$\begin{aligned}
\text{m2+} = S(x+5\lambda/4-\tfrac{1}{4}\lambda) = S(x+\lambda) = S(x+2\pi) \\
= A\sin(x+2\pi) + B + C(x+2\pi) \\
= A\sin(x) + B + Cx + 2\pi C
\end{aligned}$$

$$\begin{aligned}
\text{m2--} = S(x+5\lambda/4+\tfrac{1}{4}\lambda) = S(x+3\lambda/2) = S(x+3\pi) \\
= A\sin(x+3\pi) + B + C(x+3\pi) \\
= A\sin(x+\pi) + B + Cx + 3\pi C \\
= -A\sin(x) + B + Cx + 3\pi C
\end{aligned}$$

so dass der Messwert m2 des Messelements 5b

$$\text{m2} = \text{m2+} - \text{m2-} = 2A\sin(x) - \pi C$$

beträgt. Ein drittes Signal m3 wird folgendermassen generiert:

$$\begin{aligned}
\text{m3} &= \text{m1+} + \text{m1--} + \text{m2+} + \text{m2--} \\
&= 4B + 4Cx + 5\pi C
\end{aligned}$$

Nach einem geeigneten Nullabgleich liefern die Messelemente 5a und 5b die Signale:

$$\text{m1} = -2A\cos(x)$$

$$\text{m2} = 2A\sin(x)$$

Aus diesen Teilsignalen m1 und m2 kann in bekannter Weise die Feininterpolation innerhalb einer Markierperiode vorgenommen werden.

Nach einem weiteren geeigneten Nullabgleich gilt für das dritte Signal:

$$m3 = 4Cx$$

Das dritte Teilsignal m3 gibt die Grobposition und damit die Periode an, wo sich der Messkopf 4 befindet. Die Kombination der aus der einzigen Markierspur ermittelbaren Signale ergibt somit die genaue, absolute Position der Teile 1 und 2 zueinander.

Die Figur 3 zeigt ein Schaltschema einer Auswertungsschaltung gemäss der Erfindung. Die beiden differentiellen Messelemente 5a und 5b werden auf je einen differentiellen Verstärker 7a bzw. 7b geführt. Damit erhält man die beiden Ausgangssignale m1 und m2 für die an sich bekannte Feininterpolation. Ueber den Verstärker 7c wird die Summe aller vier Messwerte und somit das Signal m3 für die Grobposition gebildet. Der Einfachheit halber sind die Nullabgleiche und Normierungen nicht wiedergegeben.

Das erfindungsgemässe Messsystem erlaubt auch eine Temperaturkompensation des Messsignals. Die Amplitude A der Sinuskomponente wird in ihrer ursprünglichen physikalischen Prägung über den gesamten Messweg als konstant vorausgesetzt. Der Temperaturgang des Messkopfs 4, welcher für alle beteiligten Messelemente als gleich vorausgesetzt wird, kann bewirken, dass die elektrische Amplitude A der Teilsignale m1 und m2 verfälscht wird. Damit wird auch das Signal m3 um den gleichen Faktor verzerrt. In der Auswertungsschaltung werden die Signale m1 und m2 in Quadrierschaltungen 8 quadriert und mittels des Verstärkers 9 addiert. Es gilt:

$$(m1)^2 + (m2)^2 = 4A^2$$

und dieses Korrektursignal wird dem Regler 10 als Istwert der Signalamplitude zugeführt. Dort wird es mit dem Sollwert der Signalamplitude verglichen. Der Ausgang des Reglers 10 wird über Widerstände 11 mit den Messelementen 5a und 5b verbunden und gewährleistet so die Konstantregelung der Signalamplitude A. Die Verstärkung der Eingangssignale m1+, m1-, m2+ und m2- wird nämlich so verändert, dass die Amplituden der Signale m1 und m2 konstant bleiben. Durch diese Rückkopplung der gemessenen Amplitude sind alle Signale m1, m2 und m3 temperaturunabhängig geworden. Je nach verwendetem Messelement kann der Ausgang des Reglers 10 einfach als Speisung der Messelemente 5a und 5b verwendet werden. Dies ist zum Beispiel bei Hallelementen oder magnetischen Widerständen möglich.

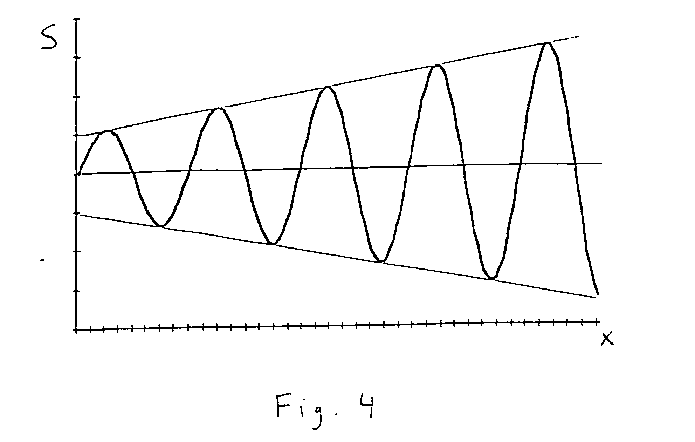

In der Figur 4 ist eine Abwandlung der beschriebenen Signalform wiedergegeben. Die Figur 4 zeigt eine schematische Darstellung des Signalverlaufs gemäss einer weiteren Ausführungsform der Erfindung, die mit dem gleichen Lesekopf 4 gelesen werden kann. Die veränderliche physikalische Grösse enthält den folgenden Signalverlauf als Funktion S der zu messenden Position x:

$$S(x) = (A + Bx) * \sin(2\pi x/\lambda) + C$$

wobei $\lambda$ die Periode der zyklischen Komponente und A, B und C Konstanten sind. Das Gesamtsignal S ist also eine Sinusfunktion mit einer linear zunehmenden Amplitude und einem überlagerten Gleichstromanteil. Die entsprechende Diskriminierung der absoluten Komponente und der Feinsignalkomponente ermöglicht wiederum die genaue Bestimmung der absoluten Position der Teile zueinander.

Eine weitere, nicht gezeigte, sehr einfache Signalform besteht in

$$S(x) = A + Bx$$

und erlaubt eine sehr einfache, aber etwas weniger genaue Absolutmessung. Das Signal enthält in diesem Fall kein Feinsignal sondern nur die absolute Komponente.

Im Allgemeinen können zur Konstantregelung der Differenz der aufgrund der gemessenen Signale ermittelten Positionen der Messelemente 5a, 5b Mittel zur entsprechenden Verstärkung oder Abschwächung der einzelnen Signale der Messelemente 5a, 5b mit einem jeweils gleichen Faktor vorgesehen sein. Die Tatsache, dass die Differenz der Positionen der Messelemente 5a, 5b konstant ist, ermöglicht diese einfache Korrektur (beispielsweise zur Kompensation von Temperatureinflüssen).

Die physikalische Natur der Markierspur kann beliebig sein. Das in der Messrichtung veränderliche Signal kann beispielsweise ein veränderlicher magnetischer Fluss, eine veränderliche magnetische Permeabilität, eine veränderliche Lichtintensität oder Lichtfrequenz, die Phasenlage zweier kohärenter Lichtstrahlen, eine veränderliche mechanische Dimension oder eine veränderliche Schichtdicke einer magnetisch permeablen Schicht sein.

**Patentansprüche**

1. Messsystem zur kontaktlosen Messung der Position zweier relativ zueinander bewegbarer Teile (1, 2), wobei der erste Teil (1) mit einer Markierspur versehen ist, in welcher ein in der Messrichtung veränderliches Signal enthalten ist, und der zweite Teil (2) zumindest einen Sensor zum Erfassen des Signals aufweist, **dadurch gekennzeichnet, dass** das Signal in einer einzigen Markierspur (3) enthalten ist und eine absolute Komponente enthält, welche für jede Position der beiden Teile (1, 2) zueinander jederzeit einen eindeutigen Zusammenhang zwischen dem Signal und der Position der beiden Teile (1, 2) zueinander darstellt und somit ein Mass für die absolute Position der beiden Teile (1, 2) zueinander ist.

2. Messsystem nach Anspruch 1, **dadurch gekennzeichnet, dass** die absolute Komponente des Signals eine monotone und kontinuierliche Funktion der zu messenden Position ist.

3. Messsystem nach Anspruch 1 oder 2, **dadurch gekennzeichnet, dass** das Signal weiterhin eine von der absoluten Komponente diskriminierbare weitere Komponente enthält, welche ein Feinsignal darstellt.

4. Messsystem nach einem der Ansprüche 1 bis 3, **dadurch gekennzeichnet, dass** der erste Teil (1) kreiszylinderförmig ausgebildet ist und die Markierspur (3) drehsymmetrisch daran angeordnet ist.

5. Messsystem nach einem der Ansprüche 1 bis 4, **dadurch gekennzeichnet, dass** der Sensor (4) mindestens zwei Messelemente (5a, 5b) enthält, welche in der Messrichtung zueinander versetzt sind.

6. Messsystem nach Anspruch 5, **dadurch gekennzeichnet, dass** zur Konstantregelung der Differenz der aufgrund der gemessenen Signale ermittelten Positionen der Messelemente (5a, 5b) Mittel zur entsprechenden Verstärkung oder Abschwächung der einzelnen Signale der Messelemente (5a, 5b) mit einem jeweils gleichen Faktor vorgesehen sind.

7. Messsystem nach Anspruch 5 oder 6, **dadurch gekennzeichnet, dass** die Messelemente (5a, 5b) differentiell ausgeführt sind.

8. Messsystem nach einem der Ansprüche 3 bis 7, **dadurch gekennzeichnet, dass** die weitere Komponente des Signals einen periodischen Charakter hat.

9. Messsystem nach einem der Ansprüche 3 bis 8, **dadurch gekennzeichnet, dass** die absolute Komponente des Signals eine lineare Funktion und die weitere Komponente des Signals eine Sinusfunktion der zu messenden absoluten Position ist.

10. Messsystem nach Anspruch 9, **dadurch gekennzeichnet, dass** zur Konstantregelung der Amplitude der Sinusfunktion eine elektrische Rückkopplung (8, 9, 10, 11) der gemessenen Amplitude zu den Messelementen (5a, 5b) vorgesehen ist.

11. Messsystem nach einem der Ansprüche 1 bis 10, **dadurch gekennzeichnet, dass** das in der Messrichtung veränderliche Signal ein veränderlicher magnetischer Fluss ist.

12. Messsystem nach einem der Ansprüche 1 bis 10, **dadurch gekennzeichnet, dass** das in der Messrichtung veränderliche Signal eine veränderliche magnetische Permeabilität ist.

13. Messsystem nach einem der Ansprüche 1 bis 10, **dadurch gekennzeichnet, dass** das in der Messrichtung veränderliche Signal eine veränderliche Lichtintensität oder Lichtfrequenz ist.

14. Messsystem nach einem der Ansprüche 1 bis 10, **dadurch gekennzeichnet, dass** das in der Messrichtung veränderliche Signal eine veränderliche mechanische Dimension ist.

15. Messsystem nach einem der Ansprüche 1 bis 10, **dadurch gekennzeichnet, dass** das in der Messrichtung veränderliche Signal eine veränderliche Schichtdicke ist.

Fig. 1

Fig. 2

Fig. 3

Fig. 4